# FASCICULE DE BREVET EUROPEEN

(11) **EP 3 378 635 B1**
(45) Date de publication et mention de la délivrance du brevet: **11.01.2023**
(21) Numéro de dépôt: 17173908.9
(22) Date de dépôt: 01.06.2017
(51) Int. Cl.: B29C 70/48, B29C 70/68, B29C 70/30, B29C 70/46, B29C 70/78, B29C 45/14, B29D 99/00

(54) **PROCÉDÉ DE FABRICATION DE PIÈCES EN MATÉRIAU COMPOSITE PRÉ-IMPRÉGNÉ.**
HERSTELLUNGSVERFAHREN VON WERKSTÜCKEN AUS VORIMPRÄGNIERTEM VERBUNDWERKSTOFF.
METHOD FOR MANUFACTURING PARTS OF PREPREG COMPOSITE MATERIAL.

(30) Priorité: 20.03.2017 FR 1752274
(43) Date de publication de la demande: 26.09.2018
(73) Titulaire: Plastiques du Val de Loire, 37130 Langeais (FR)
(72) Inventeur: COMYN, Mathieu, 37130 LANGEAIS (FR); MANCEAU, Dominique, 37540 Saint Cyr sur Loire (FR)
(74) Mandataire: Ipside

(56) Documents cités:
- DE-A1- 10 258 630
- DE-U1-202015 104 694
- FR-A1- 3 002 477
- JP-A- 2007 001 179
- US-A- 5 356 588
- US-A1- 2014 084 509

## Description

### DOMAINE TECHNIQUE DE L'INVENTION

L'invention concerne un procédé de fabrication par moulage d'une pièce en matériau composite pré-imprégné, et l'utilisation d'une telle pièce.

L'invention trouve notamment des applications dans le domaine de la construction automobile.

Un matériau composite pré-imprégné est un semi-produit constitué d'un renfort tel que des fibres, tissées ou non tissées, associé à un liant de résine thermoplastique ou thermodurcissable par une technique de dispersion et/ou d'imprégnation.

On entend par semi-produit un produit partiellement élaboré à partir de matière première.

L'invention sera plus particulièrement décrite au regard d'un procédé visant à fabriquer des pièces de forme non développable comportant des formes surmoulées, et éventuellement des éléments surmoulés appelés inserts.

Une pièce de forme non-développable est une pièce ne pouvant pas être appliquée à un plan, c'est-à-dire ne pouvant pas être déployée le long d'une génératrice ayant le même plan tangent à celle-ci.

### ÉTAT DE LA TECHNIQUE

Il est connu de l'art antérieur de fabriquer des pièces en matériau composite pré-imprégné grâce à un procédé de moulage par thermocompression de tissu composite pré-imprégné.

En variante, l'estampage consiste à réchauffer dans une première étape une plaque, dite « organosheet », consituée de plusieurs plis consolidés en matériau composite pré-imprégné, puis à l'emboutir dans une deuxième étape avec un moule métallique froid.

Les pièces en matériau composite pré-imprégné ainsi obtenues comportent un renfort fibreux qui permet un renforcement mécanique du matériau.

Ces procédés connus présentent des inconvénients. Des effets de bord, se caractérisant pas un empilement de tissus non consolidés, sont observés en périphérie. Une opération de détourage est alors nécessaire pour supprimer les imperfections, ce qui implique des coûts supplémentaires et peut provoquer des dégradations.

Il est également connu de fabriquer des pièces en matériau composite renforcé grâce à un procédé de moulage par injection de thermoplastiques renforcés de fibres structurantes.

Les pièces obtenues par injection ne peuvent cependant contenir que des fibres courtes, de taille inférieure à 2mm et isotropes, ce qui limite le renforcement mécanique apporté par le renfort fibreux.

Des exemples de fabrication de pièces en matériau composite renforcé sont notamment décrits dans le brevet américain US5356588, la demande de brevet US2014/084509, la demande de brevet français FR3002477 et la demande de brevet japonais JP2007-001179.

### OBJET DE L'INVENTION

La présente invention vise à remédier aux inconvénients de l'état de la technique cités ci-dessus.

A cet effet, la présente invention propose un procédé permettant la fabrication de pièces en matériau composite pré-imprégné ne nécessitant pas d'opération de détourage, compatible avec tous types de matériau composite pré-imprégné, à matrice thermoplastique ou thermodurcissable, et dont le renfort fibreux permet un renforcement mécanique supérieur à l'art antérieur.

Selon l'invention, le procédé de fabrication d'une pièce en matériau composite pré-imprégné comportant une étape de moulage dans un moule d'un matériau composite pré-imprégné d'un polymère dit d'imprégnation, est caractérisé en ce que ledit moulage comporte au moins une phase de thermocompression dudit matériau composite pré-imprégné, en ce que le procédé comprend l'addition d'un polymère dit de finition en surépaisseur et/ou en périphérie du matériau composite pré-imprégné, l'addition étant effectuée avant ou pendant le moulage, et en ce que le moulage est réalisé à une température sensiblement égale à la température de fusion ou de réticulation du polymère de finition, de sorte à créer des formes surmoulées.

L'addition du polymère de finition est réalisée :
a. par injection du polymère de finition en périphérie ou en surépaisseur dudit matériau composite pré-imprégné lors du moulage, pendant et/ou après la phase de thermocompression, et/ou
b. par le dépôt du polymère de finition en surépaisseur sur le matériau composite pré-imprégné avant l'étape de moulage.

Dans un mode de réalisation de l'invention, l'addition du polymère de finition est effectuée lors du moulage, par injection dudit polymère de finition en périphérie ou en surépaisseur du matériau composite pré-imprégné (1), ladite injection étant effectuée pendant et/ou après la phase de thermocompression, sensiblement à la température de fusion ou de réticulation du polymère de finition.

On parle de procédé hybride (injection et thermocompression).

Selon ce mode de réalisation, les phases de thermocompression et d'injection sont avantageusement réalisées simultanément dans un seul et même moule.

Toujours selon ce mode de réalisation de l'invention, le moule présente de préférence des formes telles que des rainures, clips et/ou futs de vissage, dans lesquelles est injecté le polymère de finition.

Dans un autre mode de réalisation de l'invention, l'addition du polymère de finition est effectuée avant le moulage, par dépôt du polymère de finition en surépaisseur sur le matériau composite pré-imprégné.

Selon ce mode de réalisation, lors de l'addition du polymère de finition, le matériau composite pré-imprégné est à température ambiante et le polymère de finition est sensiblement à la température de fusion ou de réticulation dudit polymère de finition.

Toujours selon ce mode de réalisation de l'invention, le polymère de finition est ajouté dans le matériau composite pré-imprégné en quantité suffisante pour remplir un volume dit libre, situé entre la paroi interne du moule et le matériau composite pré-imprégné.

Par volume libre, on entend les parties du moule qui ne sont pas destinées à être remplies par le matériau composite pré-imprégné après thermocompression.

Dans ce même mode de réalisation de l'invention, le moule présente avantageusement des formes telles que des rainures, clips et/ou futs de vissage, dans lesquelles diffuse le polymère de finition lors de la thermocompression.

Selon cette caractéristique, le volume libre est constitué au moins en partie par les rainures, clips et/ou futs de vissage.

Selon une caractéristique, le polymère de finition est un polymère ou mélange de polymères compatible avec le polymère d'imprégnation.

On entend par polymère d'imprégnation, un polymère ou mélange de polymères.

Par compatible on entend que le polymère de finition est apte à se mélanger avec le polymère d'imprégnation du matériau composite pré-imprégné, à une température sensiblement égale à la température de fusion ou de réticulation dudit polymère de finition. L'invention vise plus particulièrement un polymère ou mélange de polymères, mais on peut envisager pour l'imprégnation et/ou l'addition tout autre type de matériau adéquat tel qu'une résine.

Le matériau composite pré-imprégné est chargé en fibres.

La pièce ainsi fabriquée présente un surmoulage permettant d'éviter les effets de bord dus au moulage par thermocompression.

La phase de thermocompression permet de consolider et mettre en forme le matériau composite pré-imprégné.

Le matériau composite pré-imprégné est sous forme d'un textile dont les fibres sont de préférence tissées (on parle de tissu), mais peut être sous forme de non tissé (aussi appelé NCF : non crimp fiber), ou de mat.

Ainsi, le moulage de pièces de géométries complexes, notamment des pièces non-développables, est facilitée par la drappabilité (déformabilité) supérieure du tissu par rapport à une plaque dite « organosheet », même réchauffée.

Le polymère de finition est de préférence identique au polymère d'imprégnation.

Selon cette caractéristique, dans la variante selon laquelle le polymère de finition est ajouté avant le moulage, par dépôt du polymère de finition en surépaisseur sur le matériau composite pré-imprégné, on dit que le polymère est ajouté en excès

De manière avantageuse, le polymère d'imprégnation et le polymère de finition sont du PA66, un polyamide présentant un compromis intéressant entre propriétés thermo-mécaniques et processabilité pour les applications automobile. Le PA66 est composé de deux molécules à 6 atomes de carbone, de formule NH(CH₂)₆NH-CO(CH₂)₄CO.

Par ailleurs, la géométrie des pièces composites moulées par thermocompression à partir de plaques consolidées se limite à une forme développable. Elles présentent une épaisseur constante sans singularité de type nervures, clips ou futs de vissage, et il est nécessaire de surmouler des formes par injection dans une deuxième étape.

Cependant, l'adhérence de ces formes surmoulées avec le matériau composite moulé par thermocompression n'est pas satisfaisante de par la différence de température et/ou la différence de nature chimique des polymères d'imprégnation et d'injection. Il est donc nécessaire de réaliser un ancrage mécanique.

Par ancrage mécanique on entend assemblage de la partie injectée à la partie thermocompressée sans adhérence interfaciale.

L'invention vise également à résoudre ces inconvénients en proposant un procédé tel que décrit précédemment.

Le polymère de finition est injecté ou diffuse en périphérie ou surépaisseur du matériau composite pré-imprégné de sorte à conférer à la pièce moulée une forme non développable.

Le polymère de finition adhère au matériau composite pré-imprégné, et plus particulièrement au polymère d'imprégnation, sans nécessiter d'ancrage supplémentaire.

Le moule dans lequel le polymère de finition est injecté ou diffuse comporte avantageusement une cavité de forme non développable.

Le polymère de finition est injecté ou diffuse en périphérie du moule de sorte à remplir un volume dit libre compris entre la paroi interne du moule et le matériau composite pré-imprégné comprimé par thermocompression.

Dans la variante selon laquelle le moule présente des formes telles que des rainures, clips et/ou futs de vissage, le polymère est injecté ou diffuse dans lesdites formes.

La pièce moulée est ainsi rigidifiée et/ou fonctionnalisée par la présence des formes surmoulées.

De manière avantageuse, le procédé de fabrication selon l'invention comporte une étape de refroidissement du moule avant éjection de la pièce moulée.

Cette étape de refroidissement consiste à abaisser la température du moule en dessous de la température de fusion ou de réticulation du polymère de finition.

Une amélioration du procédé consiste à concevoir un entrefer réglable afin de permettre le moulage de la pièce selon différentes épaisseurs. La variation d'entrefer permet de varier le volume de la cavité du moule, et donc de placer plus d'épaisseur de matériau composite et de polymère de finition.

Dans le cas où le matériau composite pré-imprégné est un tissu, le procédé de fabrication de l'invention comporte avantageusement une étape préalable qui consiste à découper le tissu selon un profil correspondant au développé de la pièce à fabriquer, et auquel on retire avantageusement une largeur comprise entre 1 et 5 mm sur le périmètre permettant de laisser un espace pour le polymère injecté.

Le moule comporte de préférence une frette permettant de maintenir le moule fermé tout en faisant évoluer l'épaisseur de la pièce.

En variante, le moule est équipé d'une chambre de compression.

Le tissu composite pré-imprégné consiste de préférence en un empilement de plusieurs plis de tissus.

Selon cette caractéristique, le moule comporte des aiguilles mobiles aptes à maintenir les plis pendant la fermeture du moule.

L'invention concerne en outre une pièce obtenue par le procédé tel que décrit précédemment.

La pièce ainsi obtenue est de préférence de forme non développable.

Une telle pièce ne présente aucun ancrage mécanique ou trace résultant d'une étape d'ancrage mécanique.

En outre, une telle pièce ne présente pas de dégradation résultant d'une opération de détourage.

L'invention porte également sur l'utilisation d'une pièce telle que décrite précédemment en industrie automobile, ferroviaires, nautiques ou aéronautiques.

### BRÈVE DESCRIPTION DES FIGURES

D'autres avantages, buts et caractéristiques particulières de la présente invention ressortiront de la description non limitative qui suit d'au moins un mode de réalisation particulier des procédés objets de la présente invention, en regard des dessins annexés, dans lesquels :
- Les figures 1a à 1c sont des vues schématiques illustrant une première variante du procédé de l'invention.
- Les figures 2a à 2c sont des vues schématiques illustrant une seconde variante du procédé de l'invention,
- La figure 3 représente le volume libre dans lequel est injecté ou diffuse le polymère de finition selon le procédé de l'invention,
- La figure 4 est une photographie d'une pièce moulée grâce au procédé de l'invention.

### DESCRIPTION DÉTAILLÉE DE MODES DE RÉALISATION DE L'INVENTION

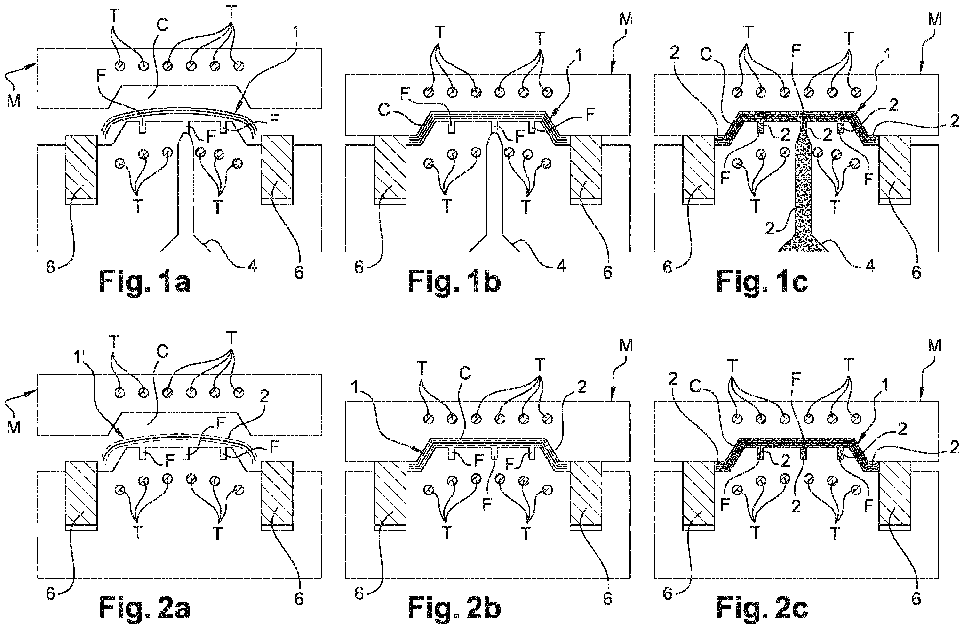

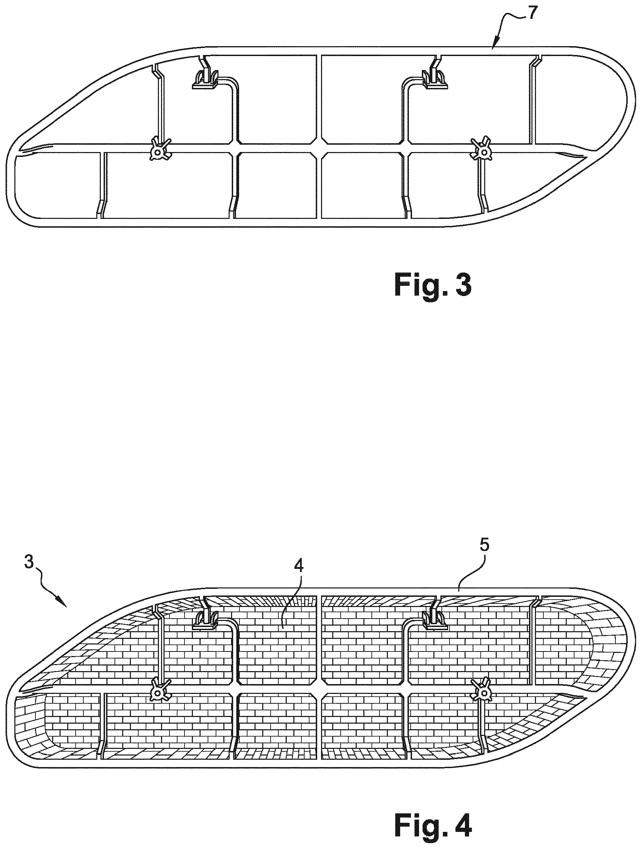

Les figures 1a à 1c illustrent une première variante du procédé de fabrication d'une pièce moulée 3 (figure 4) en matériau composite pré-imprégné selon l'invention.

Un tissu 1 en matériau composite pré-imprégné de PA66 est disposé dans un moule M à température comprise entre 80 et 200°C (figure 1a), ledit moule comportant des canaux T de régulation thermique et une cavité C de forme non développable, c'est-à-dire comportant des formes F dites périphériques, telles que des rainures, clips et/ou futs de vissage.

Le moule M est ensuite fermé et chauffé à une température sensiblement égale à la température de fusion du PA66 (figure 1b), grâce aux canaux T de régulation thermique.

Des frettes 6 permettent de maintenir le moule M fermé tout en faisant évoluer l'épaisseur de la pièce.

Puis, simultanément, le moule M est mis sous pression de manière à compresser le tissu 1, on parle de thermocompression, et du PA66 2 est injecté en périphérie et/ou en surépaisseur du tissu 1, dans les formes F périphériques (figure 1c), grâce à une buse d'injection (4). Le PA66 2 injecté se propage dans la cavité C du moule M, de sorte à remplir un volume périphérique, dit volume libre 7 (figure 3), compris entre la paroi interne de la cavité C du moule et le tissu 1 en matériau composite pré-imprégné. Ainsi, les formes F périphériques font partie du volume libre 7 (figure 3).

Enfin, dans une étape non représentée, le moule M est refroidi à une température comprise entre 80 et 200°C, identique à la température initiale, grâce aux canaux T de régulation thermique, pour permettre l'éjection de la pièce moulée 3 (figure 4).

Les figures 2a à 2c illustrent une seconde variante du procédé de fabrication d'une pièce moulée 3 (figure 4) en matériau composite pré-imprégné selon l'invention.

Un tissu 1' en matériau composite pré-imprégné de PA66 en excès est disposé dans un moule M à température comprise entre 80 et 200°C (figure 2a), ledit moule comportant des canaux T de régulation thermique et une cavité C de forme non développable, c'est-à-dire comportant des formes F dites périphériques, telles que des rainures, clips et/ou futs de vissage.

Par « en excès », on entend que la quantité de PA66 présent dans le tissu 1 ' est telle qu'une partie du PA66, dite en excès 2, est destinée à diffuser dans le volume libre 7 (figure 3) du moule M, lors de la phase de thermocompression (figure 2c).

De la même manière que précédemment, lors de la fermeture du moule M (figure 2b), celui-ci est chauffé à une température sensiblement égale à la température de fusion du PA66, grâce aux canaux T de régulation thermique.

Des frettes 6 permettent également de maintenir le moule M fermé tout en faisant évoluer l'épaisseur de la pièce

Puis, simultanément, le moule M est mis sous pression (figure 2c) de manière à compresser le tissu 1', on parle de thermocompression ; ce qui a pour conséquence de faire diffuser la partie en excès 2 du PA66 dans le volume libre 7 (figure 3) du moule M.

Enfin, dans une étape non représentée, le moule M est refroidi à une température comprise entre 80 et 200°C, identique à la température initiale, grâce aux canaux T de régulation thermique, pour permettre l'éjection de la pièce moulée 3 (figure 4).

Ainsi, pour les deux variantes du procédé selon l'invention, lors de la fabrication de la pièce moulée 3 (Figure 4), la température du moule M est cyclée d'une température comprise entre 80 et 200°C, à une température sensiblement égale à la température de fusion ou de réticulation du PA66.

Le chauffage et le refroidissement du moule M sont réalisés par circulation de fluide dans les canaux T de régulation thermique.

Dans une variante non représentée, le chauffage et le refroidissement du moule sont réalisés par d'autres moyens tels que : induction ou cartouches chauffantes.

La figure 3 illustre le volume libre 7 dans lequel est injecté ou diffuse le PA66 selon le procédé de l'invention.

La Figure 4 illustre une pièce moulée 3 selon le procédé de l'invention.

La pièce comporte une partie dite centrale 4 en matériau composite pré-imprégné, et une partie dite périphérique 5 en PA66.

La pièce est de forme non développable et ne présente pas d'effet de bord.

La partie périphérique 5 consiste en des formes surmoulées par injection ou diffusion.

## Revendications

1. Procédé de fabrication d'une pièce (3) en matériau composite pré-imprégné, comportant une étape de moulage dans un moule (M) d'un matériau composite pré-imprégné (1) d'un polymère dit d'imprégnation, **caractérisé en ce que** ledit moulage comporte au moins une phase de thermocompression dudit matériau composite pré-imprégné (1), **en ce que** le procédé comprend l'addition d'un polymère dit de finition (2) en surépaisseur et/ou en périphérie du matériau composite pré-imprégné (1), l'addition étant effectuée avant ou pendant le moulage, et **en ce que** le moulage est réalisé à une température sensiblement égale à la température de fusion ou de réticulation du polymère de finition (2), de sorte à créer des formes (5) surmoulées.

2. Procédé selon la revendication 1, **caractérisé en ce que** l'addition du polymère de finition (2) est effectuée lors du moulage, par injection dudit polymère de finition (2) en périphérie ou en surépaisseur du matériau composite pré-imprégné (1), ladite injection étant effectuée pendant et/ou après la phase de thermocompression, sensiblement à la température de fusion ou de réticulation du polymère de finition (2).

3. Procédé selon la revendication précédente, **caractérisé en ce que** les phases de thermocompression et d'injection sont réalisées simultanément dans un seul et même moule (M).

4. Procédé selon l'une quelconque des revendications 2 à 3, **caractérisé en ce que** le moule (M) présente des formes telles que des rainures, clips et/ou futs de vissage, dans lesquelles est injecté le polymère de finition (2).

5. Procédé selon la revendication 1, **caractérisé en ce que** l'addition du polymère de finition (2) est effectuée avant le moulage, par dépôt du polymère de finition (2) en surépaisseur sur le matériau composite pré-imprégné (1).

6. Procédé selon la revendication précédente, **caractérisé en ce que** lors de l'addition du polymère de finition (2), le matériau composite pré-imprégné est à température ambiante et le polymère de finition (2) est sensiblement à la température de fusion ou de réticulation dudit polymère de finition (2).

7. Procédé selon l'une quelconque des revendications 5 à 6, **caractérisé en ce que** le moule (M) présente des formes telles que des rainures, clips et/ou futs de vissage, dans lesquelles diffuse le polymère de finition (2) lors de la thermocompression.

8. Procédé de fabrication selon l'une quelconque des revendications précédentes, **caractérisé en ce que** le polymère de finition (2) est un polymère ou mélange de polymères compatible avec le polymère d'imprégnation.

9. Procédé selon l'une quelconque des revendications précédentes, **caractérisé en ce que** le matériau composite pré-imprégné (1) est sous forme d'un textile dont les fibres sont de préférence tissées ou non tissées.

10. Procédé selon l'une quelconque des revendications précédentes, **caractérisé en ce que** le polymère de finition (2) est identique au polymère d'imprégnation.

11. Procédé selon l'une quelconque des revendications précédentes, **caractérisé en ce qu'**il comporte une étape de refroidissement avant éjection de la pièce (3) moulée.

## Patentansprüche

1. Verfahren zur Herstellung eines Teils (3) aus vorimprägniertem Verbundmaterial, umfassend einen Schritt des Formens eines mit einem imprägnierenden Polymer vorimprägnierten Verbundmaterials (1) in einer Gussform (M), **dadurch gekennzeichnet, dass** das Formen mindestens eine Thermokompressionsphase des vorimprägnierten Verbundmaterials (1) umfasst, dadurch, dass das Verfahren die Zugabe eines Veredelungspolymers (2) an der Wulst und/oder an dem Rand des vorimprägnierten Verbundmaterials (1) umfasst, wobei die Zugabe vor oder während des Formens durchgeführt wird, und dadurch, dass das Formen bei einer Temperatur durchgeführt wird, die im Wesentlichen gleich der Schmelz- oder Härtungstemperatur des Veredelungspolymers (2) ist, um überformte Formen (5) zu erzeugen.

2. Verfahren nach Anspruch 1, **dadurch gekennzeichnet, dass** die Zugabe des Veredelungspolymers (2) während des Formens durch Einspritzen des Veredelungspolymers (2) in den Rand oder in die Wulst des vorimprägnierten Verbundmaterials (1) durchgeführt wird, wobei das Einspritzen während und/oder nach der Thermokompressionsphase im Wesentlichen bei der Schmelz- oder Härtungstemperatur des Veredelungspolymers (2) durchgeführt wird.

3. Verfahren nach dem vorhergehenden Anspruch, **dadurch gekennzeichnet, dass** die Thermokompressionsphase und die Einspritzphase gleichzeitig in derselben Gussform (M) durchgeführt werden.

4. Verfahren nach einem der Ansprüche 2 bis 3, **dadurch gekennzeichnet, dass** die Gussform (M) Formen wie Nuten, Klammern und/oder Schraubenschafte aufweist, in die das Veredelungspolymer (2) eingespritzt wird.

5. Verfahren nach Anspruch 1, **dadurch gekennzeichnet, dass** die Zugabe des Veredelungspolymers (2) vor dem Formen durch Auftragen des Veredelungspolymers (2) auf die Wulst auf das vorimprägnierte Verbundmaterial (1) durchgeführt wird.

6. Verfahren nach dem vorhergehenden Anspruch, **dadurch gekennzeichnet, dass** während der Zugabe des Veredelungspolymers (2) das vorimprägnierte Verbundmaterial Umgebungstemperatur beträgt und das Veredelungspolymer (2) im Wesentlichen die Schmelz- oder Härtungstemperatur des Veredelungspolymers (2) beträgt.

7. Verfahren nach einem der Ansprüche 5 bis 6, **dadurch gekennzeichnet, dass** die Gussform (M) Formen wie Nuten, Klammern und/oder Schraubenschafte aufweist, in die das Veredelungspolymer (2) während der Thermokompression diffundiert.

8. Herstellungsverfahren nach einem der vorhergehenden Ansprüche, **dadurch gekennzeichnet, dass** das Veredelungspolymer (2) ein Polymer oder eine Polymermischung ist, die mit dem imprägnierenden Polymer kompatibel ist.

9. Verfahren nach einem der vorhergehenden Ansprüche, **dadurch gekennzeichnet, dass** das vorimprägnierte Verbundmaterial (1) in Form eines Textils vorliegt, dessen Fasern vorzugsweise gewebt oder nichtgewebt sind.

10. Verfahren nach einem der vorangehenden Ansprüche, **dadurch gekennzeichnet, dass** das Veredelungspolymer (2) mit dem imprägnierenden Polymer identisch ist.

11. Verfahren nach einem der vorhergehenden Ansprüche, **dadurch gekennzeichnet, dass** es vor dem Auswerfen des Formteils (3) einen Kühlschritt umfasst.

## Claims

1. A method for manufacturing a part (3) of pre-impregnated composite material, including a step of moulding in a mould (M) a pre-impregnated composite material (1) of a so-called impregnation polymer, **characterised in that** said moulding includes at least one phase of thermocompressing said pre-impregnated composite material (1), **in that** the method comprises adding a so-called finishing polymer (2) as an extra-thickness and/or at the periphery of the pre-impregnated composite material (1), adding being performed before or during moulding, and **in that** moulding is made at a temperature substantially equal to the melting or cross-linking temperature of the finishing polymer (2), so as to create overmoulded shapes (5).

2. The method according to claim 1, **characterised in that** adding the finishing polymer (2) is made during moulding, by injecting said finishing polymer (2) at the periphery or as an extra-thickness of the pre-impregnated composite material (1), said injecting being performed before and/or after the thermocompression phase, substantially at the melting or cross-linking temperature of the finishing polymer (2).

3. The method according to the preceding claim, **characterised in that** the thermocompression and injection phases are simultaneously made in one and a single mould (M).

4. The method according to any of claims 2 to 3, **characterised in that** the mould (M) has shapes such as grooves, clips and/or screwing shanks, into which the finishing polymer (2) is injected.

5. The method according to claim 1, **characterised in that** adding the finishing polymer (2) is performed before moulding, by depositing the finishing polymer (2) as an extra-thickness onto the pre-impregnated composite material (1).

6. The method according to the preceding claim, **characterised in that** upon adding the finishing polymer (2), the pre-impregnated composite material is at room temperature and the finishing polymer (2) is substantially at the melting or cross-linking temperature of said finishing polymer (2).

7. The method according to any of claims 5 to 6, **characterised in that** the mould (M) has shapes such as grooves, clips and/or screwing shanks, and into which the finishing polymer (2) diffuses during thermocompression.

8. The manufacturing method according to any of the preceding claims, **characterised in that** the finishing polymer (2) is a polymer or mixture of polymers compatible with the impregnation polymer.

9. The method according to any of the preceding claims, **characterised in that** the pre-impregnated composite material (1) is in the form of a textile the fibres of which are preferably woven or non-woven.

10. The method according to any of the preceding claims, **characterised in that** the finishing polymer (2) is identical to the impregnation polymer.

11. The method according to any of the preceding claims, **characterised in that** it includes a cooling step before ejecting the moulded part (3).
